# EUROPEAN PATENT APPLICATION

(11) **EP 1 265 121 A2**
(43) Date of publication of application: **11.12.2002**
(21) Application number: 02012550.6
(22) Date of filing: 05.06.2002
(51) Int. Cl.: G06F 1/00

(54) **Fingerprint authentication unit and authentication system**

(30) Priority: 07.06.2001 JP 2001172085; 15.04.2002 JP 2002111826
(71) Applicant: Systemneeds Inc., Tokyo 105-0012 (JP)
(72) Inventor: Nakayama, Keisuke, Tokyo 105-0012 (JP); Matsuda, Kazuhisa, Tokyo 105-0012 (JP)
(74) Representative: Liesegang, Eva

(57) **Abstract**

The present invention provides a fingerprint authentication unit and an authentication system which can use one apparatus having a fingerprint collation function to thereby manage and operate a plurality of types of apparatuses or applications. By the fingerprint authentication unit, fingerprint data of a plurality of fingers of the same person is registered and stored in an IC card section(30), so that a collation control section(12) compares and collates fingerprint data detected by a fingerprint sensor(14) with the registered fingerprint data at a requested collation level corresponding to a security level of the application and, when the user is authenticated, a common control section(11) obtains from a FACCT(13) a key necessary to access a file which stores therein data to be output corresponding to the contents of the application, which key is in turn decrypted with an encryption key of a MF at an IC Card CPU(21) and used to authorize access to the file in order to the data in this file to the application.

## Description

### BACKGROUND OF THE INVENTION

### Field of the Invention

The present invention relates to a standalone fingerprint authentication unit and, more particularly to, a fingerprint authentication unit and an authentication system that can accommodate a plurality of apparatuses and applications.

### Description of the Related Art

There is available a fingerprint collation system for authenticating a user by collating his fingerprint available as a computer system or network system or even a security system in any other apparatuses.

A conventional fingerprint collation system is of a scanner type, in which, for example, a personal computer thereof registers and stores therein original fingerprint data, so that a user can enter his fingerprint data through a fingerprint authentication unit connected to the personal computer, which in turn compares and collates thus entered fingerprint data with the original fingerprint data and, if they agree with each other, authenticates him.

There is available also a data carrier type system, in which a smart card thereof registers original fingerprint data in its security memory, so that a user can enter his fingerprint data through a fingerprint collation device connected to the personal computer, which in turn compares and collates these two data items with each other to authenticate him.

Further, there is available a next generation type system, in which a fingerprint collation token registers original fingerprint data in its security memory provided therein and also collates the data therein.

Note here that the conventional technologies about the fingerprint collation system are disclosed, for example, in "Terminal and System for Authentication" described in Japanese Patent Publication (KOKOKU) No. 2001-43190 (Applicant: NEC, Inventor: ADACHI Takuya) published on Feb. 16, 2001.
Furthermore, the conventional technologies about an electronic system by means of fingerprint collation are disclosed, for example, in "Portable Individual Authentication unit and Electronic System for Authorizing Access thereto Using the Same" described in Japanese Patent Publication (KOKOKU) No. 2001-92786 (Applicant: MIZOBE Tatsuji, Inventor: SAWAGUCHI Takashi) published on Apr. 6, 2001.

Furthermore, there have been available no electronic devices provided with an ISO-Standard connection terminal that can use a simple configuration to transmit a signal using any other connection scheme, for example, by connecting to a plurality of interfaces such as a USB (universal Serial Bus) interface and/or Serial I/O (SIO) interface etc.

The above-mentioned conventional fingerprint collation system, however, only authenticates a user by operating a specific apparatus, for example, a personal computer, or by executing a specific application software and does not provide the apparatus or application with specific data or even encrypted data, so that it cannot use one fingerprint collation device to manage and operate any other types of apparatuses or applications according to their situations.

Furthermore, the above-mentioned electronic devices provided with the ISO-Standard connection terminal cannot accommodate a plurality of any other connection schemes, so that a fingerprint collation device provided with the ISO-Standard connection terminal suffers from a problem of poor applicability to the other connection schemes.

### SUMMARY OF THE INVENTION

In view of the above, it is an object of the present invention to provide a fingerprint authentication unit and an authentication system which can use one apparatus provided with a fingerprint collating function to manage and operate a plurality of types of apparatuses or applications.

It is another object of the present invention to provide a fingerprint authentication unit and an authentication system which can set different authentication degrees for different apparatuses or applications so that access thereto may be authorized corresponding to their security levels.

It is a further object of the present invention to provide a fingerprint authentication unit provided with an ISO-Standard connection terminal which can accommodate a plurality of other connection schemes.

To solve the above-mentioned problems of the conventional implementations, a fingerprint authentication unit according to the present invention comprises:
storage means provided with a plurality of data files for storing data corresponding to applications, a fingerprint template file for storing fingerprint data, a master file for storing an encryption key used to decrypt a key necessary to access each of the files, and processing means for receiving the incoming encrypted key to then decrypt it using the encryption key stored in the master file in order to thereby access each of the files and output contents thereof;
a table for storing the encrypted key necessary to access the file that corresponds to a request from the application;
a fingerprint sensor section for detecting a fingerprint; and
   control means for reading out from the table the encrypted key relating to access to the file corresponding to the request from the application to output the key to the processing means and also obtain the fingerprint data from the processing means in order to compare and collate the fingerprint data with fingerprint data detected by the fingerprint sensor section and then transfer a collation result to the application, in such a configuration that the key necessary to access the data file is stored as encrypted corresponding to each of the applications, so that this key can be used to obtain necessary data of the file, thus making it possible to authenticate the plurality of applications.

By this fingerprint authentication unit according to the present invention, each fingerprint collation level is preset for each application employed so that the control means can decide an access to any application to be FALSE if the collation does not come up with at least the level thereof, thus making it possible to implement fingerprint authentication corresponding to a security level of the application employed.

By an authentication system according to the present invention comprising the above-mentioned fingerprint authentication unit and an apparatus which can be connected to the internet and in which the applications can be executed, a common key of the master file is transmitted to a purchasing source, which in turn receives software and a code encrypted using this common key, so that this fingerprint authentication unit decrypts the code using this common key and stores it in a specific data file, which code is used in using of the software, thus permitting only a regular purchaser to keep the code for using the software in this fingerprint authentication unit to thus prevent fraudulent using.

The above-mentioned fingerprint authentication unit according to the present invention is provided with an ISO-Standard connection terminal and reads a state of a specific pin of the connection terminal, so that if the specific pin is in the power-ON state, the unit decides that the connection destination is a USB adapter device to enter the USB mode, and if the specific pin is in the power-OFF state, the unit decides whether another pin is at a high or low voltage level, and if the voltage is at the low voltage level, it decides that the connection destination is an SIO adapter device to enter the SIO mode, and if the voltage is at the high voltage level, it decides that the connection destination is an SIO adapter to enter the ISO mode, to thereby recognize the USB, SIO, and ISO interfaces automatically, thus setting these interfaces in each of the modes easily.

The above-mentioned fingerprint authentication unit provided with an ISO-Standard connection terminal according to the present invention comprises:
an input/output circuit for deciding upon power application whether the sixth pin of the connection terminal is in the power-ON/OFF state to then output a decision result, and for deciding whether the fourth pin of the connection terminal is at the high/low voltage level to then output a decision result, if the sixth pin is in the power-OFF state;
a USB interface circuit which operates in the USB mode if the sixth pin is in the power-ON state;
an 510 interface circuit which operates in the SIO mode if the sixth pin is in the power-OFF state and the fourth pin is at the LOW voltage level; and
a CPU circuit section which sets the mode based on the decision result from the input/output circuit and also which operates in the ISO mode if the sixth pin is in the power-OFF state and the fourth pin is at the high voltage level, by which the USB, SIO, and ISO interfaces can be recognized automatically to be set in each of the modes easily.

### BRIEF DESCRIPTION OF THE DRAWINGS

FIGS. 1 are external views for showing a fingerprint authentication unit related to an embodiment of the present invention;

FIG. 2 is a block diagram for showing a configuration of the fingerprint authentication unit related to the embodiment of the present invention;

FIG. 3 is a schematic illustration for showing a FACCT;

FIG. 4 is a typical circuit diagram for showing the fingerprint authentication unit provided with an ISO-Standard connection terminal related to the embodiment of the present invention;

FIG. 5 is a circuit diagram for showing a USB adapter device related to the embodiment of the present invention;

FIG. 6 is a circuit diagram for showing an SIO adapter device related to the embodiment of the present invention;

FIG. 7 is a circuit diagram for showing a host-side ISO terminal connection section related to the embodiment of the present invention;

FIG. 8 is a schematic table for showing contents of signals of an ISO7816-2 terminal of the fingerprint authentication unit related to the embodiment of the present invention; and

FIG. 9 is a flowchart for showing processing in the fingerprint authentication unit provided with the ISO-Standard connection terminal related to the embodiment of the present invention.

### DESCRIPTION OF THE PREFERRED EMBODIMENTS

The following will describe embodiments of the present invention with reference to the drawings.
A fingerprint authentication unit according to an embodiment of the present invention registers and stores original fingerprint data of a plurality of fingers to thereby compare and collate user-entered fingerprint data with the registered original fingerprint data at a requested accuracy level corresponding to a security level of an apparatus or an application and, if the user is authenticated, obtains from a file access control table a key necessary to access a file storing data to be output corresponding to contents of the apparatus or the application and decrypts the key using an encryption key to thereby authorize access to the file using thus decrypted key so that the data in this file may be output to the apparatus or the application, by which the user can be authenticated corresponding to a collation level of the application etc. independently in the apparatus to thereby access the file using the necessary key decrypted with the encryption key, thus managing highly confidential data at a plurality of accuracy levels to control the operation for each of the apparatus and the application.

Furthermore, a fingerprint authentication unit provided with an ISO-Standard connection terminal according to the embodiment of the present invention reads in a state of a sixth pin of this ISO terminal and, if the sixth pin is in the power-ON state, decides that a connection destination is a USB adapter device to enter a USB mode and, if the sixth pin is in the power-OFF state, decides whether a voltage of a fourth pin is at a high/low level and, if the voltage is at the low level, decides that that the connection destination is an SIO adapter device to enter an SIO mode and, if the voltage is at the high level, decides that the connection destination is an ISO to enter an ISO mode, to thereby automatically recognize the USB, SIO, and ISO interfaces, thus setting them to any of these modes easily.

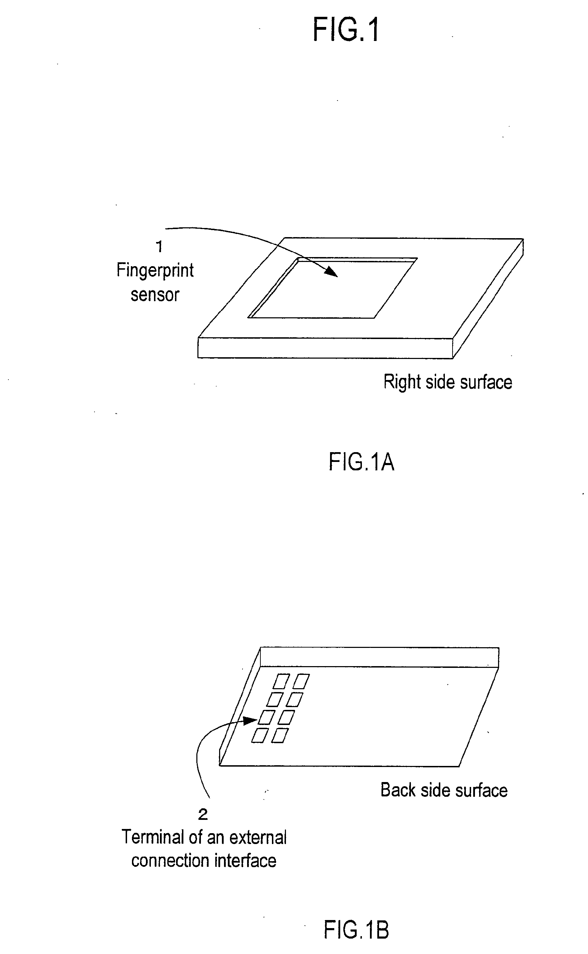

The following will roughly describe the fingerprint authentication unit (present unit) according to the embodiment of the present invention with reference to FIG. 1. FIGS. 1 are external views for showing a fingerprint authentication unit related to the embodiment of the present invention.
As shown in FIGS. 1, the present unit has a thin box shape, comprising a fingerprint sensor 1 on its right side surface as shown, for example, in FIG. 1A and a terminal 2 of an external connecting interface section.

The present unit, being a standalone Intelligent Authentication unit (IAU), is used to collate fingerprint data therein and also, based on a collation result, obtain appropriate data of the data of a plurality of fingers stored therein and then transfer the data.

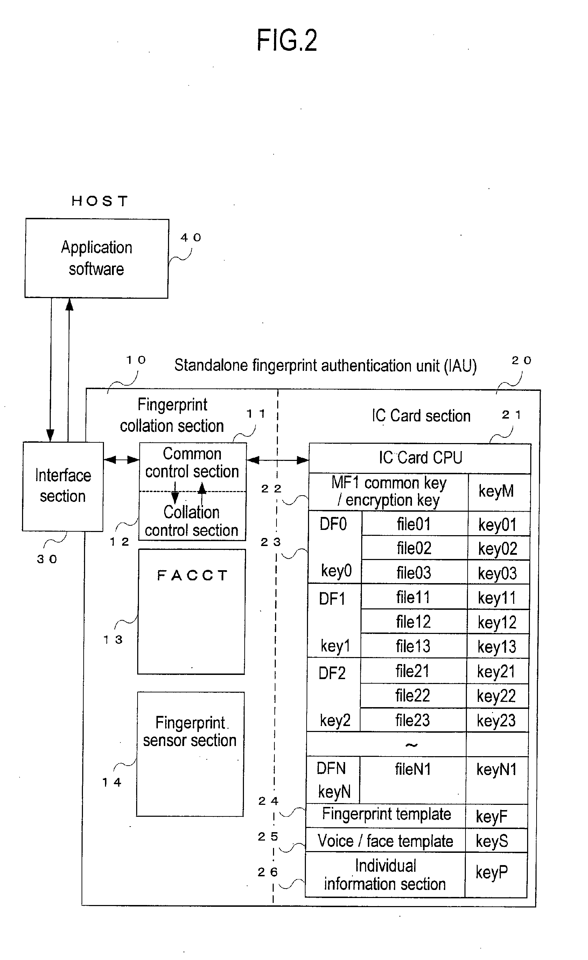

The following will describe a configuration of the present unit with reference to FIG. 2. FIG. 2 is a block diagram for showing THE configuration of the fingerprint authentication unit related to the embodiment of the present invention.
As shown in FIG. 2, the present unit a fingerprint collation section 10, an IC card section 20, and an interface section 30.
Note here that FIG. 2 shows an application software as a host (HOST) 40 to be connected to the present unit.

The fingerprint collation section 10 is comprised of a common control section 11, a collation control section 12, a File Access Control Condition Table (FACCT) 13, and a fingerprint sensor section 14.

The common control section 11 receives a command incoming through the interface section 30 to decide whether this command is used for fingerprint collation or for data access to the IC card section 20 and, if it is for fingerprint collation, outputs it to the collation control section 12 and, if it is for data access, outputs it to a IC card CPU21 of the IC card section 20.

The collation control section 12 consists of a one-chip microcomputer incorporating therein a CPU, a program ROM, and a work RAM, to operate a program for collation control and a program in the common control section 11.
Specifically, the collation control section 12 receives a fingerprint collation command from the common control section 11 to obtain an encrypted key KeyF' necessary to open a fingerprint template file 24 of the FACCT13 and then output it to the IC card CPU21.

Furthermore, when having received incoming fingerprint template data from the IC card section 20, the collation control section 12 develops it in the work RAM to compare and collate it with fingerprint data input from the fingerprint sensor section 14. Then, the collation control section 12 outputs a collation/decision result to the common control section 11.
Note here that the collation control section 12 changes a collation level corresponding to a security level so that collation/decision can be performed at a collation level desired by the application.

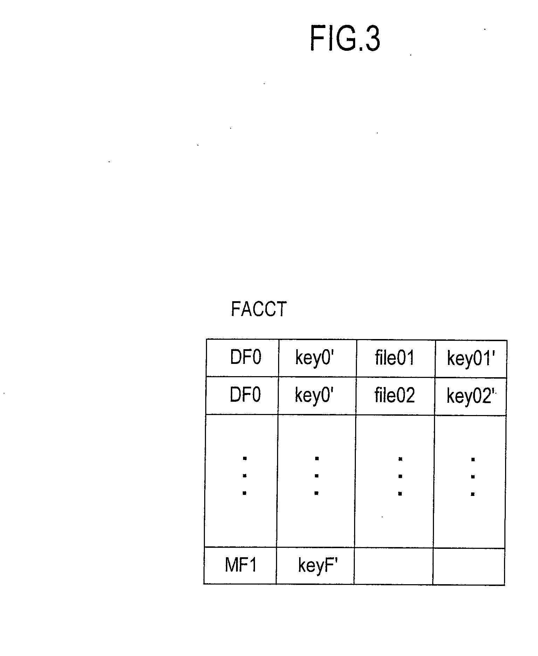

As shown in FIG. 3, the FACCT13 is a table of keys for reading out a variety of types of files in the IC card section 20. FIG. 3 is a schematic illustration for showing the FACCT. The keys are stored therein as encrypted using, for example, a common-key encryption type crypto-scheme of DES (Data Encryption Standard) or an open-key encryption type crypto-scheme of RSA (Rivest Shamir Adleman). This table is created by the side that provides the present unit, so that it cannot be changed by the user.

The fingerprint sensor section 14 is used to take in fingerprint data. In this embodiment, the fingerprint sensor section 14 is implemented by a commercially available module.

The IC card section 20 can be used to make a variety of settings for a configuration of a file and for control of access to the file and is basically comprised of, for example, the IC card CPU21, the master file (MF) 22, a collection (DF: Dedicate File) 23 of a plurality of data files (EF: Elementary File), the fingerprint template file 24, a voice/face template file 25, and an individual information section 26.

The IC card section 20 is connected to the common control section 11 through a serial interface in such a configuration that the common control section 11 plays the role of a card reader of the IC card section 20.
The IC card section 20 has the same construction as tat of an ordinary IC card in that the IC card CPU21 manages each of blocks of the memory sub-divided into specified structures. To each block, each key (password for access) can be set or different keys can be set for reading, writing, deleting, etc.

The IC card CPU21 is equipped with a CPU for controlling the processing at the IC card section 20.
Specifically, when having received incoming keys for accessing a major item and a minor item from the common control section 11, the IC card CPU21 decrypts the keys using an encryption key KeyM of the MF22 and uses thus decrypted keys to authorize access to a major item DF and that to a minor item file. By this double authorization for the major and minor items, the data in the file is output to the common control section 11.

Furthermore, when having received from the common control section 11 a key necessary for obtaining data in the fingerprint template file 24, the voice/face template file 25, and the individual information section 26, the IC card CPU21 decrypts the key using the encryption key KeyM of the MF22 and uses thus decrypted key to obtain the data in these files and output it to the common control section 11.

The MF22 is provided with the encryption key KeyM necessary to decrypt an input key already encrypted. Note here that this encryption key KeyM provides a common key used to commonly decrypt any keys used to access the DF and files.

The DF23 comprises directories each classified into DF0 through DFN each of which has a file configuration containing file01 through fileN1. Each of the files stores data to be transmitted to the host 40. Note here that to access each directory (major item DF), key0 through keyN are necessary, while to access a file (minor item file), key01 through keyN1 are necessary.

The fingerprint template file 24 registers and stores original fingerprint data of one or a plurality of fingers, which data can be accessed by opening the template file with the KeyF to be output.
The voice/face template file 25 stores data of voice and faces registered, which voice/face data can be accessed by opening the template file with the KeyS to be output.
The individual information section 26 stores individual information of an owner of the present unit, for example, a password necessary to access a laboratory.

The interface section 30 serves to interface the host 40 and the present unit with each other, coming in ISO-7816, SIO, Bluetooth, irDA, etc.

The host 40 may come in an apparatus in which an application which requires individual authentication to operate it, for example, a personal computer, a household appliance, a cellular phone, a car, a door system, a safe, an ATM, a CD player, a credit terminal, etc.

The following will describe the operations of the present unit.
The common control section 11 of the present unit receives a collation request transmitted via the interface section 30 from the application software of the host 40, to output to the collation control section 12 a command for checking at a collation level demanded by the application.

The collation control section 12 accesses the FACCT13 according to thus input command to pick up the common key and encryption key KeyF' necessary to open the fingerprint template file 24 and output it to the IC Card CPU21 of the IC card section 20.

When having received the key KeyF' of the fingerprint template file 24, the IC card CPU21 decrypts it using the common key and encryption key KeyM stored in the MF1 to pick up the key KeyF from the key KeyF' and then uses it to open the fingerprint template file 24 to read out the data and output it to the common control section 11. The common control section 11 outputs the data of the fingerprint template file 24 to the collation control section 12.

The collation control section 12 transfers thus input data of the fingerprint template file 24 to the work RAM. The collation control section 12 decrypts the data of the fingerprint template file 24, if encrypted.
Then, the common control section 11 outputs to the collation control section 12 a command for picking up a fingerprint and, simultaneously, request the host 40 to give display asking the user to out his finger at the finger sensor section 14.

When the finger is put at the finger sensor section 14 according to the display given by the host 40 and its fingerprint is detected, the collation control section 12 reads in the data of the detected fingerprint into the work RAM so that it may be collated with the fingerprint data stored in the fingerprint template file 24.
A collation result is output from the collation control section 12 to the common control section 11 and then therefrom to the host 40. The host 40 in turn continues processing by the application if thus input collation result indicates TRUE and, if it indicates FALSE, puts an end to the application processing.

Furthermore, when the collation result indicates TRUE, in some cases the host 40 accesses the data file of the IC card section 20 to obtain the data stored therein depending on the contents of the application. This case is described specifically as follows.
Note here that the application may come in such a form of authenticating the fingerprint to continue its processing if the result indicates TRUE, obtaining, instead of fingerprint authenticating, data of a specific file (data with confidentiality) from the IC card section 20 to then output it to the host 40, or authenticating the fingerprint and also obtaining the confidential data from the IC card section 20 to then output it to the host 40.

By the application, if it is requested to obtain data with high confidentiality from the IC card section 20, the fingerprint is collated by the present unit and, if the collation result indicates TRUE at a collation level requested by the application, access starts to be made to a data file requested by the application.
For example, in a case of an application whereby data in file01 in the DF0 region in the IC card section 20 is to be read out and transferred to the host 40, if the fingerprint collation comes up with TRUE, the common control section 11 references the FACCT13 to pick up Key0' necessary to access the DF0 and output it to the IC card CPU21 of the IC card section 20. Note here that Key0' is encrypted beforehand.

The IC card CPU21 decrypts the encrypted Key0' using the encryption key KeyM of the MF1 and uses the decrypted key to authorize access to the DF0 region. Therefore, even if a fraudulent user has read out the Key0' of the FACCT13, he cannot access the DF0 unless he knows the KeyM of the MF1.

Next, the common control section 11 references the FACCT13 to output to the IC card CPU21 the Key01' necessary to access file01. This Key01' is also encrypted beforehand.
The IC card CPU21 decrypts the Key01' encrypted with the KeyM of the MF1 and then uses the decrypted Key01 to authorize access to file01.

Then, the IC card CPU21 reads out data of file01 and outputs it to the common control section 11, while the common control section 11 also transfers this data to the host 40. If this data of file01 is encrypted beforehand, it is decrypted and transferred to the host 40. Moreover, if the data is highly confidential, efficiently it is transferred as it is to the host 40.

Furthermore, in a case of composite authentication whereby the above-mentioned fingerprint collation method is used together with another authenticating method, an external authentication key of the template file may be read out from the FACCT13 to thereby read out the data of this template file from the IC card section 20 and transfer it to the host 40 for authentication there.

If, for example, the fingerprint collation comes up with TRUE, the common control section 11 reads out the KeyS' necessary to access the voice/face template file 25 from the FACCT13 and outputs it to the IC card CPU21. The KeyS' is encrypted beforehand and so decrypted using the encryption key KeyM of the MF1. The IC card CPU21 uses the decrypted key KeyS to access the voice/face template file 25 and output the relevant data to the common control section 11 and then therefrom to the host 40. Thus, the host 40 collates the voice/face.
Note here that if the voice/face template file 25 is encrypted beforehand, it may be transferred as encrypted and, otherwise, it may be decrypted and then transferred.

The following will describe processing performed according to an accuracy of fingerprint collation (collation level or security level) corresponding to the contents of the application at the host 40.
The application transmits the fingerprint collation level to the present unit and, if the fingerprint processing is performed, decides whether the collation has reached the transmitted collation level and, if that is not the case, avoids performing the subsequent processing to end. If the collation accuracy has reached a specific level in processing of a high confidentiality, conversely, the application can continue the processing, thus strengthening security.
Note here that the collation level needs that its digitized similarity degree given as a result of simple collation/comparison thereof be decided to be at least a certain reference value.
Furthermore, the application makes request for a collation level, which request can be satisfied by an authentication method stored in the present unit. For example, if someone's fingerprint cannot be obtained, to establish collation level 5, the present unit may evaluate in an overall manner (that is, works out a numeral by, for example, weighting, addition, formulation) a collation result on a password (level 2) and voice/face data (level 3).

For example, the host 40 may employ the following two methods to pay charge by connecting through a line to a computer in a financial institute.
By one method, a user is authenticated by the present unit, so that on condition that a collation result should be of at least a preset specific accuracy (collation level), a user ID and payment information recorded in the IC card section 20 beforehand are encrypted and transmitted together with a unit identifier such as a serial number of the present unit to the computer in the financial institute, which computer in turn uses a public key corresponding to the unit identifier to decrypt the received encrypted data, thus obtaining the user ID and the payment information. The crypto scheme employed here may be a common-key scheme.
By the other method, the user is authenticated by the present unit, so that on condition that a collation result should be of at least a specific accuracy (collation level), the data (authentication result) and the user ID that indicate his identity are encrypted using a secret key and transmitted together with the unit identifier to the computer in the financial institute, which computer in turn uses a public key corresponding to the unit identifier to decrypt the authentication result, so that if they agree with a unit identifier and a user ID stored in this computer, a password about his authentication stored in this computer is obtained. The crypto scheme employed may be a common key scheme.

The following will describe examples of applying fingerprint authentication in the present unit.
Since the fingerprint template 24 in the IC card section 20 registers therein data of the fingers of a plurality of users, some application examples may such that if the fingerprint of any of these users is collated, fingerprint authentication is completed.
Alternatively, some application examples may such that fingerprint authentication is not completed until a specific finger predetermined by the user is collated.
Further alternatively, some application examples may be such that fingerprint authentication is not completed unless finger collation is performed a plurality of number of times in a specific order of the fingers which is predetermined by the user.

Further alternatively, in the finger hook mode in which an application starts a specific operation upon collation of the finger, specific processing can be assigned and performed on the basis of which finger is subject to fingerprint collation and further in which order of the fingers the fingerprints thereof are collated.

For example, in a case where the host 40 is a cellular phone, if the present unit is inserted into a specific slot in the cellular phone with the application set in the finger hook mode, when a specific one of the fingers is put on the fingerprint sensor section 14, a fingerprint of the specific finger is collated in the present unit, which decides which one of the fingers was used in this fingerprint collation and transfers to the cellular phone the information of an operating instruction which corresponds to the authenticated finger. Specifically, if an instruction (command) of DT110 (which instructs making a phone call to telephone No. 110) is stored in the template of the present unit and output to the application in the cellular phone, the cellular phone executes this command to call telephone No. 110 automatically. It is thus possible to provide the same operations over different models of the cellular phone.

The cellular phone may correlate finger information and the corresponding operation processing programs (which are stored in the cellular phone) beforehand, to execute any one of the programs to which an application corresponds based on the finger information input from the present unit. As such, the present unit can operate differently corresponding to the different fingers using the application.

Furthermore, a specific program may be executed when the fingerprints are collated at the fingerprint sensor section 14 of the present unit in a specific order.
For example, in a case where the host 40 is a cellular phone, if the index finger was put twice and the middle finger was put once at the fingerprint sensor section 14 for fingerprint collation, the information about the order in which the fingers are subjected to fingerprint collation is transferred from the present unit to the cellular phone.
The cellular phone in turn has operation programs as correlated to this information of the finger order, so that it responds to information of a finger order input from the present unit to execute, for example, a program for calling an emergency contact telephone number.

The following will describe the operations for writing data to the IC card section 20 of the present unit.
To write data to the present unit, it is necessary to a template of a fingerprint of at least one of the fingers of a user is registered beforehand when the present unit is used. First the user is authenticated by his finger thus registered beforehand and, when his identity is confirmed, additionally registers or changes the fingerprint templates of his other fingers in the present unit.

The following will describe a case of updating a file in the present unit with reference to an example where software is purchased over the internet.
A purchaser enters predetermined information such as a commodity he wants to purchase and a method of paying for that into a purchase application page through the host 40 and requests for a higher security level mode to have his fingerprint collated in order to be authenticated. When authenticated, he picks up the RSA-encrypted common key KeyM stored in the MF1 of the IC card section 20 and transmits it to a purchasing source in the internet.

The purchasing source subdivides overall processing into processing of payment data and processing about the common key and encrypts a code number necessary to activate purchasing software using the common key KeyM and then sends the code number together with the software to the purchaser. The purchaser side receives a program file at the body of his terminal to input the encrypted code number into the present unit and further transfer it to the IC Card section 20.

The IC card section 20 uses a secret key corresponding to the common key to thereby restore the original code and store it in a specified file number. Which application enters a code number or an account number and in which file number they can be entered need to be registered beforehand for all of the applications.
In this configuration, when the purchasing software is activated, the relevant file is directly accessed without requiring authentication of the purchaser, to read out an activation code to use it.

In the case of a time-limited e-certificate, the present unit confirms the identity of the purchaser by his fingerprint at the time of updating and sends the common key to the certificate issuing source to ask it to send back data of a new certificate as encrypted. The present unit, in turn, decrypts the data using the secret key of the IC card section 20 to rewrite a specified file. This method can thus update a certificate without collecting the present unit for that purpose.

Furthermore, when executing a utility to delete an unnecessary application concerning the data of a file in the IC card section 20, the present unit erases the data of the corresponding file.

The following will describe some systems utilizing the present unit.
First, it is assumed that the present unit is connected in configuration to a personal computer or cellular phone connectable to the internet.
If the purchaser goes on shopping over the internet and uses his credit card in payment, he selects a commodity and then, when a payment screen appeared, receives an incoming collation request command for credit payment through the application.

The common control section 11 takes out the encrypted key KeyF' of the fingerprint template file 24 from the FACCT13 and outputs it to the IC Card section 20. The IC card CPU21 of the IC card section 20 uses the key KeyM of the MF1 area to decrypt the key KeyF to take it in. Then, it reads in the fingerprint data from the fingerprint sensor section 14 into the work RAM region to collate it with the fingerprint template. In this case, the setting of the collation level is changed to, for example, level 4 of the five collation levels corresponding to the application.

If the collation comes up with TRUE, the common control section 11 references the FACCT13 to output to the IC Card section 20, for example, a key (encrypted key Key1') necessary to access the DF1 region and a key (encrypted key11') necessary to open file11 to read out the data in the file11. The data in the file11, consisting of user ID and credit card information which are encrypted using the secret key of the present unit, is transferred to the application together with an identifier of the present unit. The credit payment side in turn decrypts the user ID etc. using an open key corresponding to the identifier of the present unit. Moreover, the present unit encrypts the authentication result and the user ID using the secret key and transmits it together with the identifier to the application, so that the credit payment side decrypts the encrypted data using the open key to thereby obtain the authentication result and the user ID. In this case, also, the crypto scheme may be the common key scheme.

Furthermore, in the case of home banking services, if fingerprint collation comes up with TRUE upon activation of the application, access is authorized to file01 of the DF0 region. file01 stores encrypted access IDs for the banking services for the purchaser, so that the ID can be transferred by the common control section 11 to the application, which in turn transmits it as encrypted to a server of the service provider for subsequent provision of the services.

Furthermore, an affinity divination application (affinity divination game) reads in fingerprint data of Ms. A into a region in the work RAM of the collation control section 12 and, then, that of Mr. B into another region of the work RAM of the collation control section 12 to perform collation. In some cases of utilization, affinity may be divined by replying a result of this collation to the application upon collation.

Furthermore, in a case where a cellular phone is used to receive a music distribution service to reproduce a downloaded melody, if license information of this melody is stored in a file of the IC card section 20 beforehand, reproduction of the melody may be started by replying to the host 40. This is possible because when charge for music distribution is paid, the license information is transmitted from the application to the present unit and stored in the IC card section 20, so that each time the downloaded melody is reproduced subsequently, the IC card section 20 can be accessed to output the license information to the application to thereby reproduce the melody.

Furthermore, a private safe in a bank is provided with the present unit in which a borrower's fingerprint is registered in place of a key or an IC card. Such a system may be possible that when the user is identified on the basis of the result of fingerprint collation, the safe door is opened, to permit only the user to access it without a risk of losing the key or the card.

Furthermore, in the case of control on an access door of a project development room in the laboratory, its password is entered on a numeric keypad, so that if fingerprint collation comes up with TRUE, the password stored in the file of the individual information section 26 of the IC Card section 20 is read out and compared to the entered password to thereby decide whether the door should be opened. Note here that instead of entering the password, only the fingerprint collation result may be used to decide whether the access door should be opened. Such a double-check system may be considered that instead of entering the password on the numeric keypad a voice/face template may be sent to the host 40 for face image collation.

Furthermore, although presently an ATM terminal needs to insert a magnetic card therein to then enter a password for cash dispensing, the present unit of a user may be connected to the apparatus for fingerprint collation so that if the collation results indicates TRUE, file12 of the DF1 may be taken out and sent to the ATM terminal. By storing the information of the magnetic card as encrypted in file12 beforehand, security can be improved over that by the presently used card, thus improving easiness-to-use also.

Furthermore, although presently charge is paid with a magnetic card at a POS cash register by read-in of the card data and signature of a user, he may connect the present unit to the POS cash register to be identified and then transfer his payment bank account or the credit data, thus improving convenience greatly.

Furthermore, in control of a car, for example, a special vehicle, fileN1 may store beforehand a file of such functions of those of the vehicle as to be authorized in operation. In this configuration, when a driver is identified upon start of the vehicle, contents of fileN1 are transferred to the control section of the vehicle to thereby permit him to use only those functions authorized for him.
Furthermore, the opening/closing of the door and the operation of the ignition key of a car may be controlled using the present unit for prevention of burglary. Specifically, the present unit can be attached to a cellular phone to transmit unique data about a car number that can be encrypted in infrared or Bluetooth communication, to authorize the door opening/closing and the ignition operation. Note here that those operations are stored in a history.

Of a variety of methods for accessing a file in the IC card section 20, for example, a hierarchy-type access method by the present unit involves independent fingerprint collation in the unit and subsequent decryption by use of the encryption key KeyM of two access keys for a major item DF and a minor item file each so that the decrypted two keys may be used to output confidential data to the host 40, thus giving an effect of holding and managing the confidential data of a plurality of fingers.
Furthermore, there is available another file access method called a chain type (list type) one for making access consecutively in a chain manner, by which the data can be taken out in a double or triple manner, thus giving an effect for safely holding and managing the confidential data of a plurality of fingers.

Furthermore, by the present unit, the fingerprint can be authenticated at a collation level which corresponds to a security level demanded by an application, thus giving an effect of implementing fingerprint authentication that corresponds to any of a variety of apparatuses and applications.

Furthermore, by the present unit, the fingerprint template file can register and store therein the data of fingerprints of a plurality of fingers of the same user, so that the fingerprint authentication processing can be ended if any one of the fingers having their fingerprints thus registered is authenticated, thus giving such an effect that even if one of the fingers cannot be used in authentication because of an injury, the other registered fingers can be used to continue the application.

Furthermore, by the present unit, based on the registered data of the fingerprints of a plurality of fingers of the same user, it is possible to collate the fingerprint of a specific one of the fingers or the fingerprints of the fingers in a specific order in order to continue the application, thus improving security further.

Furthermore, by the present unit, based on the registered data of the fingerprints of a plurality of fingers of the same user, it is possible to collate the fingerprint of a specific one of the fingers or the fingerprints of the fingers in a specific order in order to continue a specific operation, thus simply operating the host 40.

Furthermore, some applications may use the present unit more than one to demand authentication data of a plurality of fingers in a specific order of the fingers in operation. For example, there may be such an application that an e-will can be opened only when specific two attorneys authenticate it or that a big fund can be paid only when the president and the treasurer authenticate it.

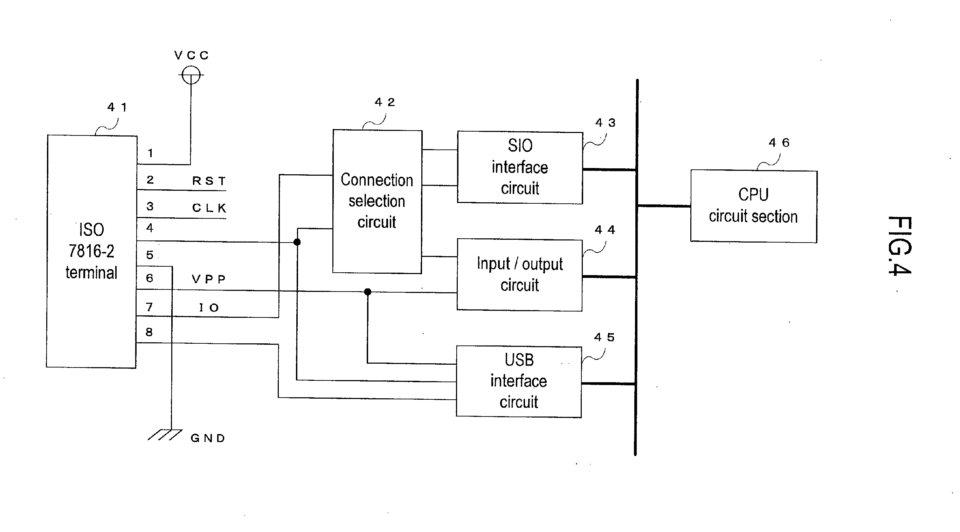

The following will describe a configuration of an electronic devices provided with an ISO-Standard connection terminal in a fingerprint authentication unit related to the embodiment of the present invention with reference to FIG. 4. FIG. 4 is a typical circuit diagram for showing the fingerprint authentication unit provided with an ISO-Standard connection terminal related to the embodiment of the present invention.
As shown in FIG. 4, the fingerprint authentication unit provided with the ISO-Standard connection terminal related to the embodiment of the present invention basically comprises an ISO7816-2 terminal 41, a connection selection circuit 42, an SIO interface circuit 43, an input/output circuit 44, a USB interface circuit 45, and a CPU circuit section 46.
Note here that although the fingerprint authentication unit of FIG. 4 is provided with also the configuration of FIG. 2 for the purpose of authentication of the user himself, its part related to connection is extracted and shown.

The fingerprint authentication unit may come in an IC card with a built-in memory or an IC Card storing a program therein for executing specific processing, finding applications in a standalone user authentication unit etc. The IC card may be replaced with a stick type or an even smaller electronic devices.

The following will describe the sections of the fingerprint authentication unit specifically.
The ISO7816-2 terminal 41 is designed to accommodate the ISO7816-2 communication scheme and typically connected to an ISO7816-2 terminal connection section on the host side and has pins 1-8 in such a configuration that the first pin is supplied with power supply VCC, the second pin receives an incoming reset signal (RST), the third pin receives a lock signal (CLK), and the fifth pin is connected to the ground (GND).

The fourth pin of the IS07816-2 terminal 41 is connected to the connection selection circuit 42 and the USB interface circuit 45 to thereby supply a signal to these circuits 42 and 45.
Furthermore, the sixth pin of the ISO7816-2 terminal 41 is connected to the input/output circuit 44 and the USB interface circuit 45 to thereby supply a signal (VPP) to these circuits 44 and 45.

Furthermore, the seventh pin of the ISO7816-2 terminal 41 is connected through the connection selection circuit 42 to the SIO interface circuit 43 to thereby transmit and receive a signal with these circuits.
Furthermore, the eighth pin of the ISO7816-2 terminal 41 is connected to the USB interface circuit 45, which outputs USB differential signals (D+ signal, D- signal) through the fourth and eighth pins thereof respectively. The USB decides a difference between the D+ and D- signals as a signal level to enable transmission and reception by means of bilateral transfer of the signals.

The connection selection circuit 42 is connected to the ISO7816-2 terminal 41 at its fourth and seventh pins, to output a signal from the fourth pin to the input/output circuit 44 and the SIO interface circuit 43 and a signal from the SIO interface circuit 43 to the ISO7816-2 terminal 41 at its seventh pin.

The specific operations of the connection selection circuit 42 are as follows: upon power application, the connection selection circuit 42 outputs the signal at the fourth pin of the ISO7816-2 terminal 41 to the input/output circuit 44, which then decides whether this signal is at the high/low level, so that if it is at the low level, the connection selection circuit 42 provides the SIO mode to thereby output the signal at the fourth pin of the ISO7816-2 terminal 41 to the SIO interface circuit 43 and the signal from the SIO interface section 43 to the ISO7816-2 terminal 41 at its seventh pin.

If the input/output circuit 44 decides that the signal is at the high level, on the other hand, the connection selection circuit 42 provides the ISO7816-2 mode to thereby connect the fourth pin of the ISO7816-2 terminal 41 with the SIO interface circuit 43, in order to input the signal at that fourth pin to the SIO interface circuit 43 and output the signal of the SIO interface circuit 43 to the ISO7816-2 terminal 41 at its seventh pin.

The SIO interface circuit 43 operates in the SIO mode to receives the incoming signal from the fourth pin of the ISO7816-2 terminal 41 through the connection selection circuit 42 and output the signal through the connection selection circuit 42 to the IOS7816-2 terminal 41 at its seventh pin.

Upon power application, the input/output circuit 44 checks the state of the sixth pin of the ISO7816-2 terminal 41 to decide whether it is at 3.3V or 0V and then output a decision result to the CPU circuit section 46. Subsequently, the input/output circuit 44 checks the state of the fourth pin of the ISO7816-2 terminal 41 through the connection selection circuit 42 to decide whether it is at the high/low voltage level and then output a decision result to the CPU circuit section 46.

If supplied with a power voltage of 3.3V from the sixth pin of the ISO7816-2 terminal 41, the USB interface circuit 45 operates in the USB mode to so that the ISO7816-2 terminal 41 inputs and outputs the USB differential signals through its fourth and eighth pins.

The CPU circuit section 46 receives from the input/output circuit 44 a decision signal indicating whether the sixth pin of the ISO7816-2 terminal 41 is at 3.3V/0V and, if it is at 3.3V, provides the USB mode to transmit and receive a signal through the USB interface circuit 45, if it is at 0V and the fourth pin of the ISO7816-2 terminal 41 is at the low level, provides the SIO mode to transmit and receive a signal through the SIO interface circuit 43 and, if it is at 0V and the fourth pin of the ISO7816-2 terminal 41 is at the high level, provides the ISO7816-2 mode to transmit and receive a signal through the input/output circuit 44.

Note here that the SIO interface circuit 43, the input/output circuit 44, the USB interface circuit, and the CPU circuit 46 may be constituted in a one-chip microcomputer or their functions may be implemented by software partially or wholly.

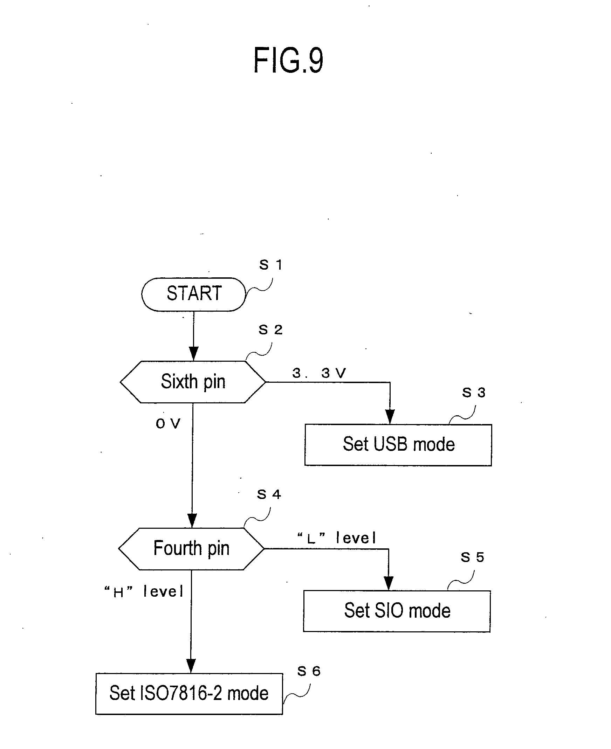

The following will describe the operations in the fingerprint authentication unit with reference to FIG. 9. FIG. 9 is a flowchart for showing processing in the fingerprint authentication unit provided with an ISO-Standard connection terminal related to the embodiment of the present invention.
When power is applied on the fingerprint authentication unit, the inside of the CPU circuit section 46 and the other circuits are initialized (S1), then the input/output circuit 44 reads in the state of the sixth pin through the ISO7816-2 terminal 41 (S2) and, if power-ON (3.3V) is decided, outputs the decision result to the CPU circuit section 46, which in turn decides that the connection destination is a USB adapter to initialize the USB interface circuit 45 (set the USB mode at S3), thus executing a main program.

Note here that in the reception processing in the USB mode, the USB differential signals from the fourth and eighth pins of the ISO7816-2 terminal 41 are input to the USB interface circuit 45, while in the transmission processing, the USB differential signals are output from the USB interface circuit 45 to the ISO7816-2 terminal 41 at its fourth and eighth pins.

If the input/output circuit 44 decides that the sixth pin of the ISO7816-2 terminal 41 is at the power-OFF state (0V), on the other hand, it outputs the decision result to the CPU circuit 46 and then reads in the state of the fourth pin through the connection selection circuit 42 (s4) and, if it is at the LOW voltage level, outputs the decision results to the CPU circuit section 46, which in turn decides that the connection destination is the SIO adapter to make switching to the SIO interface circuit 43 and then initialize it (set the SIO mode at S5), thus executing the main program.

Note here that in the reception processing in the SIO mode the signal is input from the fourth pin of the ISO7816-2 terminal 41 to the SIO interface circuit 43 through the connection selection circuit 42, while in the transmission processing the signal is output from the SIO interface circuit 43 through the connection selection circuit 42 to the ISO7816-2 terminal 41 at its seventh pin.

If, the input/output circuit 44 decides that the fourth pin of the SIO7816-2 terminal 41 is at the high voltage level, on the other hand, it outputs the decision result to the CPU circuit section 46, which in turn decides that the connection destination is the ISO7816-spec adapter, to make switching to an interface circuit conforming to the ISO7816 communication specifications and then initialize it (set the ISO7816-2 mode at S6), thus executing the main program.

Note here that in the reception processing in the ISO7816-2 mode the signal is input from the seventh pin of the ISO7816-2 terminal 41 to the input/output circuit 44 through the connection selection circuit 42, while in the transmission processing the signal is output from the input/output circuit 44 through the connection selection circuit 42 to the ISO7816-2 terminal 41 at its seventh pin.

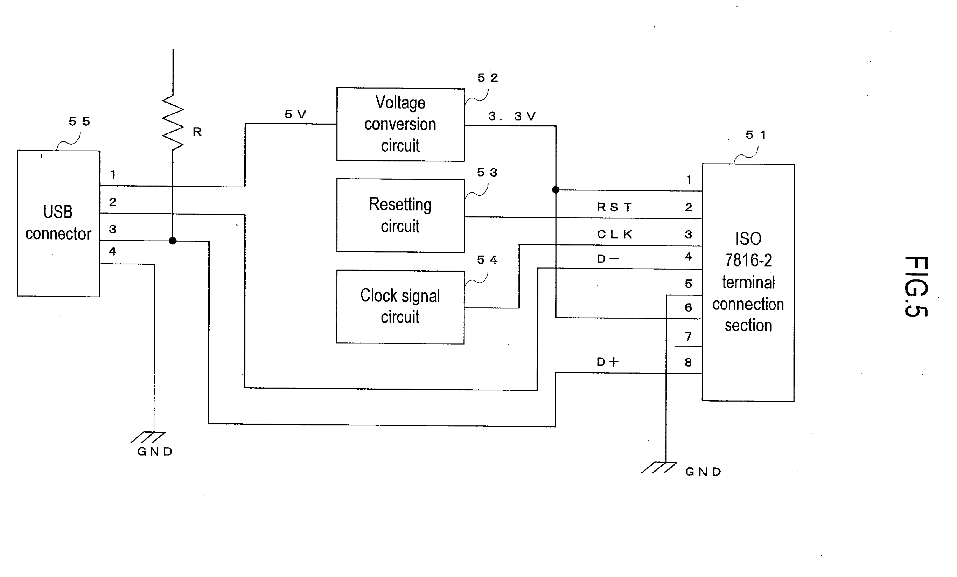

The following will describe a USB adapter device related to the embodiment of the present invention with reference to FIG. 5. FIG. 5 is a circuit diagram for showing the USB adapter device related to the embodiment of the present invention.
As shown in FIG. 5, the USB adapter device related to the embodiment of the present invention basically comprises an ISO7816-2 terminal connection section 51, a voltage conversion circuit 52, a resetting circuit 53, a clock signal circuit 54, and a USB connector 55.

The following will specifically describe various sections of the USB adapter device.
The ISO7816-2 terminal connection section 51 has a terminal shape conforming to the ISO7816-2 Standards, having first through eighth pins in such a configuration that the first and sixth pins are supplied with 3.3V from the voltage conversion circuit 52, the second pin is supplied with the reset signal (RST) signal from the resetting circuit 53, the third pin is supplied with the clock signal (CLK) from the clock signal circuit 54, and the fifth pin is connected to the ground (GND) level.

In this configuration, the reserved fourth pin of the IS07816-2 terminal connection section 51 is assigned for the D+ signal of the USB and the eighth pin, for the D- signal thereof. Since the USB is set for full-speed communication, a pull-up resistor R is connected to the D+ signal supplying signal line.

The seventh pin of the ISO7816-2 terminal connection section 51 can be used for general-purpose inputting or outputting by controlling the program in the fingerprint authentication unit so that an LED (Light Emitting Diode) can be turned ON/OFF or the fingerprint authentication unit can read out the ON/OFF state of the switch.

The voltage conversion circuit 52 is supplied with 5V from the host side to convert it to a voltage of 3.3V and supply it to the side of the fingerprint authentication unit. The 5V signal line is connected to the first pin of the USB connector 55 and the 3.3V signal line, to the first and sixth pins of the ISO7816 terminal connection section 51.

The resetting circuit 53 outputs the reset signal (RST) to the ISO7816 terminal connection section 51 at its second pin.

The clock signal circuit 54 outputs the clock signal (CLK) to the ISO7816-2 terminal connection section 51 at its third pin.

The USB connector 55 has a terminal structure confirming in shape to the USB for the purpose of connecting to the host side provided with a USB terminal in such a configuration that the first pin is connected to the voltage conversion circuit 52, the second pin is connected to the fourth pin of the ISO7816-2 terminal connection section 51, and the third pin is connected to the pull-up resistor and the eighth pin of the ISO7816-2 terminal connection section 51.

Note here that a signal from the host side is output from the second pin of the USB connector 55 to the fourth pin of the ISO7816-2 terminal connection section 51, while a signal from the fingerprint authentication unit is output from the eighth pin of the ISO7816-2 terminal connection section 51 to the third pin of the USB connector 25.

If the USB adapter device having this configuration is mounted between a host-side USB port and the fingerprint authentication unit, the USB signals from the host side can be converted to ISO7816-2 communication-spec ones to be input to the fingerprint authentication unit and, conversely, the ISO7816-2 signals from the fingerprint authentication unit can be converted to USB communication-spec ones to be output to the host side.

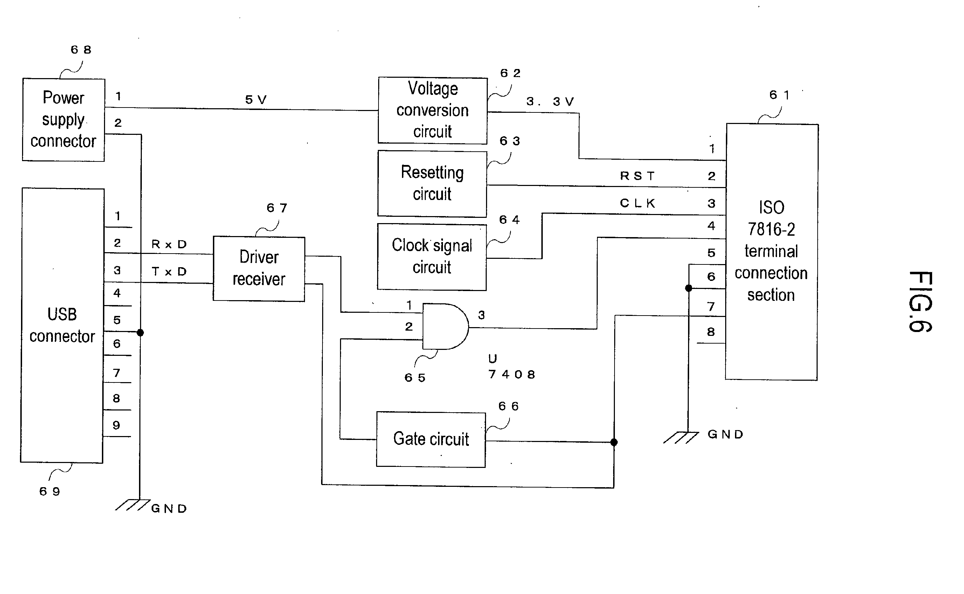

The following will describe the SIO adapter device related to the embodiment of the present invention with reference to FIG. 6. FIG. 6 is a circuit diagram for showing THE SIO adapter device related to the embodiment of the present invention.
As shown in FIG. 6, the SIO adapter device related to the embodiment of the present invention basically comprises an ISO7816-2 terminal connection section 61, a voltage conversion circuit 62, a resetting circuit 63, a clock signal circuit 64, a logical product circuit (AND circuit) 65, a gate circuit 66, a driver receiver 67, a power supply connector 68, and an SIO connector 69.

The following will specifically describe various sections of the SIO adapter device.
The ISO7816-2 terminal connection section 61 has a terminal shape conforming to the ISO7816-2 Standards in order to connect to the fingerprint authentication unit, having first through eighth pins in such a configuration that the first pin is supplied with 3.3V from the voltage conversion circuit 62, the second pin is supplied with the reset signal (RST) signal from the resetting circuit 63, the third pin is supplied with the clock signal (CLK) from the clock signal circuit 64, and the fifth and sixth pins are connected to the ground (GND) level.

In this configuration, the seventh pin of the ISO7816-2 terminal connection section 61 is connected to inputs of the driver receiver 67 and the gate circuit 66.

The voltage conversion circuit 62 is supplied with 5V through the power supply connector 68 to convert it to a voltage of 3.3V and supply it to the first pin of the ISO7816-2 terminal connection section 61.
The resetting circuit 63 outputs the reset signal (RST) to the ISO7816-2 terminal connection section 61 at its second pin.
The clock signal circuit 64 outputs the clock signal (CLK) to the ISO7816-2 terminal connection section 61 at its third pin.

The logical product circuit (AND circuit) 65 receives a RECEIVE signal from the driver receiver 37 and also a gate-OFF output signal provided from the gate circuit 66 to output a logical product of these two signals to the ISO7816-2 terminal connection section 61 at its fourth pin.
The gate circuit 66, when having received a low level signal in the reset state, outputs the gate-OFF signal at the high level. The gate circuit 66 can be easily implemented by logical circuits such as a flip-flop.

That is, since the gate circuit 66 outputs the gate-OFF output signal at the high level unless the TRANSMIT signal (of the low level) is output from the seventh pin of the ISO7816-2 terminal connection section 61, the AND circuit 65 outputs the RECEIVE signal from the driver receiver 67 as it is to the fourth pin of the ISO7816-2 terminal connection section 61.

If the TRANSMIT signal (of the high level) is transmitted from the seventh pin of the ISO7816-2 terminal connection section 61, however, the gate circuit 66 outputs the gate-OFF output signal at the low level, so that the AND circuit 65 does not output the RECEIVE signal, if received from the driver receiver 37, to the ISO7816-2 terminal connection section 61 at its fourth pin.

The driver receiver 67 outputs the RECEIVE signal from a reception pin (temporarily called the second pin [RxD]) of the SIO connector 69 to the input of the AND circuit 65 and outputs the TRANSMIT signal from the seventh pin of the IOS7816-2 terminal connection section 61 to a transmission pin (temporarily called the third pin [TxD]) of the SIO connector 69.

The power supply connector 68 supplies a voltage of 5V to the voltage conversion circuit 62 and the SIO connector 69 at its fifth pin.
The SIO connector 69 has a structure conforming to the shape of the SIO terminal in order to connect to the host side provided with the SIO connector, having the first through ninth pins in such a configuration that, for example, the second pin serves as the reception pin, the third pin serves as the transmission pin, and the fifth pin serves as the power supply pin.

The following will describe the operations of the SIO adapter device.
If the fingerprint authentication unit is connected to the SIO adapter device and power is applied thereon, the gate circuit 66 is reset directly upon power application to provide an low level output, so that the ISO7816-2 terminal connection section 61 provides an low level output at its fourth pin.
When the fingerprint authentication unit starts initialization to read in the states of the sixth and fourth pins of the ISO7816-2 terminal 41, it determines 0V and the LOW voltage level respectively to thereby decide that the connection destination is the ISO adapter device.

If the fingerprint authentication unit continues initialization as it is and provided with an IC card beforehand, when IC card gives ATR response, data is transmitted to the host side to generate an input to the gate circuit 36, so that the gate-OFF output signal changes high in level, thus permitting the reception data to be transferred from the host to the fingerprint authentication unit.

Although the ATR signal has been transmitted from the IC card above to make a shift from the mode selection state directly upon resetting to a data communication-enabled state, a product not transmitting the ATR signal, if any, can also avoid encountering abnormal reception in that the host side receives off-spec data, by gating both the TRANSMIT and RECEIVE signals so that the gate RELEASE signal may not be transferred to the host side.

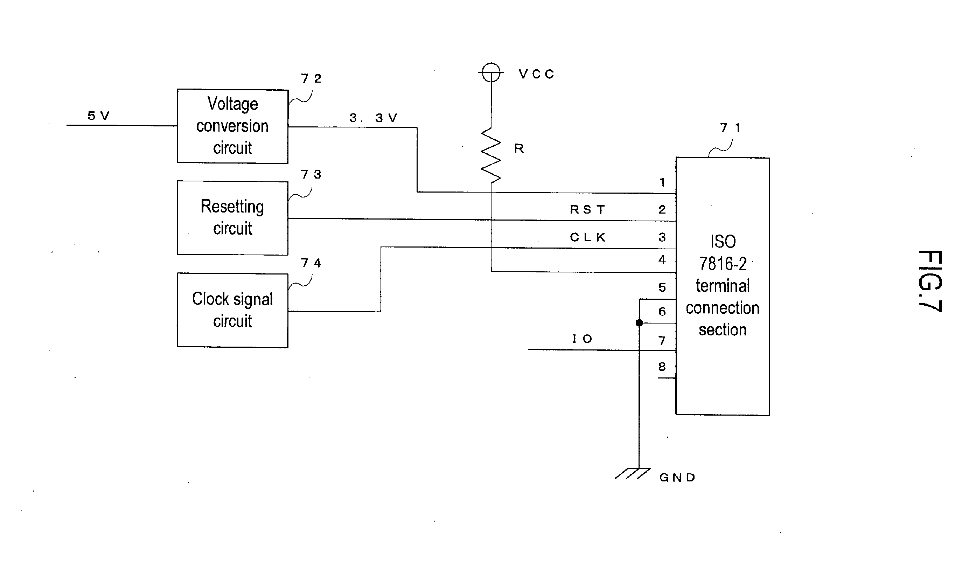

The following will describe a configuration of the ISO terminal connection section on the host side with reference to FIG. 7. FIG. 7 is a circuit diagram for showing the host-side ISO terminal connection section related to the embodiment of the present invention.
As shown in FIG. 7, the host-side ISO terminal connection section related to the embodiment of the present invention basically comprises an ISO7816-2 terminal connection section 71, a voltage conversion circuit 72, a resetting circuit 73, and a clock signal circuit 74.

The following will describe the sections of the ISO terminal connection section specifically.
The ISO7816-2 terminal connection section 71 serves as a host-side connection section conforming to the ISO7816-2 Standards, having first through eighth pins in such a configuration that the first pin is supplied with 3.3V from the voltage conversion circuit 72, the second pin is supplied with the reset signal (RST) signal from the resetting circuit 73, the third pin is supplied with the clock signal (CLK) from the clock signal circuit 74, the fourth pin is supplied with a power supply voltage VCC, the fifth and sixth pins are connected to the ground (GND) level and the seventh pin is connected to a host-side input/output (I/O).

The voltage conversion circuit 72 is supplied with 5V from the host side to convert it to a voltage of 3.3V and supply it to the first pin of the ISO7816-2 terminal connection section 71.
The resetting circuit 73 outputs the reset signal (RST) to the ISO7816-2 terminal connection section 61 at its second pin.
The clock signal circuit 74 outputs the clock signal (CLK) to the ISO7816-2 terminal connection section 71 at its third pin.

The following will describe the operations of the ISO terminal connection section.
When the ISO7816-2 terminal 41 of the fingerprint authentication unit is connected to the ISO7816-2 terminal connection section 71 of the ISO terminal connection section, the fingerprint authentication unit checks the state of the sixth pin of the ISO7816-2 terminal 41 to determine its voltage to be 0V because this sixth pin is connected to the GND terminal in the ISO7816-2 terminal connection section 71 and then checks the fourth pin of the ISO7816-2 terminal 41 to determine its voltage to be the high level because this fourth pin is connected to the power supply VCC in the ISO7816-2 terminal connection section 71, to thereby decide that the connection destination is the ISO7816-2, thus operating in the ISO7816-2 mode.
Then, the connection selection circuit 42 in the fingerprint authentication unit interconnects the seventh pin of the ISO7816-2 terminal 41 and the input/output circuit 44 for transmission and reception of a signal.

As can be seen from the above, in the case where the ISO terminal connection section is used to directly connect the fingerprint authentication unit to the inside of the host, such a circuit is added as to connect the fourth pin of the ISO7816-2 terminal connection section 71 of the ISO terminal connection section to which an IC Card is connected to a pull-up resistor and the sixth pin thereof, to the GND terminal.

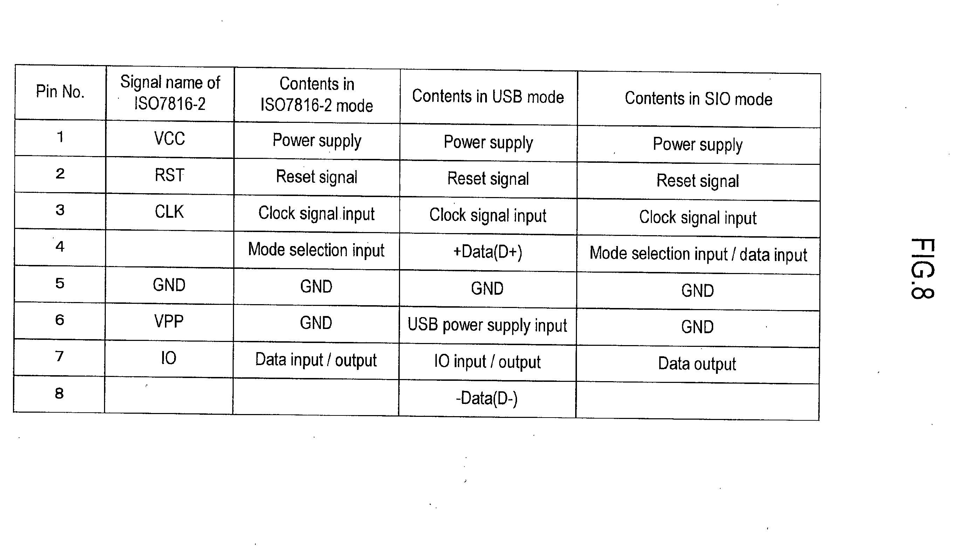

FIG. 8 lists the pin numbers of the ISO7816-2 terminal 41 of the fingerprint authentication unit, the signal names, and the signal contents in the ISO7816-2 mode, the USB mode, and the SIO mode. FIG. 8 is a schematic table for showing the contents of signals of the ISO7816-2 terminal of the fingerprint authentication unit related to the embodiment of the present invention.
In FIG. 8, the fourth pin of the ISO7816-2 terminal 41 provides a mode selection input in the ISO7816-2 mode, a +Data (D+) [data input] in the USB mode, and a mode selection input/data input in the SIO mode.

Furthermore, the sixth pin of the ISO7816-2 terminal 41 provides the GND terminal in the ISO7816-2 mode, a USB power supply input in the USB mode, and the GND terminal in the SIO mode.
Furthermore, the seventh pin of the ISO7816-2 terminal 41 provides, a data input/output in the ISO7816-2 mode, an IO input/output in the USB mode, and a data output in the SIO mode.
Furthermore, the eighth pin of the ISO7816-2 terminal 41 provides a -Data (D-) [data input] in the USB mode.

By the fingerprint authentication unit, it is possible to select an appropriate connection destination from a group of the ISO terminal connection section, the USB adapter device, and the SIO adapter device based on the state of the pins of the ISO7816-2 terminal 41, to set the ISO7816-2 mode, the USB mode, or the SIO mode automatically in order to utilize the fingerprint authentication unit in various interfaces, thus giving an effect of expanded utilization fields.

Although the above has described a technology of the present invention for automatically recognizing the USB interface, the SIO interface, and the ISO interface to easily set the corresponding modes with reference to an application to the fingerprint authentication unit, the technology of the present invention is applicable also to a general electronic devices. The electronic device here may include an IC card with a built-in memory, an IC card storing a program for executing specific processing, etc. The IC card may be replaced by a stick type or small sized electronic devices.

By the USB adapter device, when the ISO7816-2 terminal 41 of the fingerprint authentication unit is connected to the ISO7816-2 terminal connection section 51, in the USB mode a signal can be transmitted to and received from the USB connector 55 connected to the host side, thus giving an effect of utilizing the host-side USB port even if an ISO-Standard terminal is provided.

By the SIO adapter device, when the ISO7816-2 terminal 41 of the fingerprint authentication unit is connected to the ISO7816-2 terminal connection section 61, in the SIO mode a signal can be transmitted to and received from the SIO connector 69 connected to the host side, thus giving an effect of utilizing the host-side SIO port even if an ISO-Standard terminal is provided.

In a fingerprint authentication unit according to the present invention, the control means reads out an encrypted key related to access to a file which corresponds to a request from an application to then output the encrypted key to the processing means and also obtain fingerprint data from the processing means and then compares and collates the data with fingerprint data detected by the fingerprint sensor to thereby transfer a collation result to the application, so that each key stored as encrypted which is necessary to access a data file for each corresponding application can be used to obtain data of a necessary file, thus giving an effect of authenticating a plurality of applications.

In the above-mentioned fingerprint authentication unit according to the present invention, each fingerprint collation level is set for each application so that the control means can decide fingerprint data to be FALSE if collation thereof does not come up with at least such level, thus giving an effect of fingerprint authentication corresponding to a security level of the application.

In an authentication system according to the present invention comprising the above-mentioned fingerprint authentication unit and an apparatus in which an application connectable to the internet operates, a common key of the master file is transmitted to a purchasing source, which in turn receives a code encrypted with the common key and the relevant software, which common key is used by this fingerprint authentication unit to decrypt the code and store it in a specific data file so that this code can be used to use the software, to thereby permit only a regular purchaser to keep in this fingerprint authentication unit the code necessary to use the software, thus giving an effect of preventing fraudulent using.

The above-mentioned fingerprint authentication unit according to the present invention is provided with an ISO-Standard connection terminal, by which a state of a specific pin of the connection terminal can be read in, and if the specific pin is in the power-ON state, the connection destination is decided to be a USB adapter device to make shift to the USB mode and, if the specific pin is in the power-OFF state, another pin is checked for whether it is at the high/low voltage level, so that if it is at the low level, the connection destination is decided to be an SIO adapter to make shift to the SIO mode and, if it is at the high level, the connection destination is decided to be an ISO to make shift to the ISO mode, so that a USB interface, an SIO interface, and an ISO interface can be recognized automatically, thus giving an effect of setting the corresponding modes easily.

The above-mentioned fingerprint authentication unit provided with an ISO-Standard connection terminal according to the present invention comprises:
an input/output circuit for deciding upon power application whether the sixth pin of the connection terminal is in the power-ON/OFF state to then output a decision result and, if the sixth pin is in the power-OFF state, deciding whether the fourth pin of the connection terminal is at the high/low voltage level to then output a decision result;
a USB interface circuit which operates in the USB mode if the sixth pin is in the power-ON state;
an SIO interface circuit which operates in the SIO mode if the sixth pin is in the power-OFF state and the fourth pin is at the LOW voltage level; and
a CPU circuit section which sets the mode based on the decision result from the input/output circuit and also which operates in the ISO mode if the sixth pin is in the power-OFF state and the fourth pin is at the hight voltage level, by which the USB, SIO, and ISO interfaces can be recognized automatically to be set in each of the modes easily.

## Claims

1. A fingerprint authentication unit comprising:
storage means provided with a plurality of data files for storing data corresponding to applications, a fingerprint template file for storing fingerprint data, a master file for storing an encryption key used to decrypt a key necessary to access each of the files, and processing means for receiving the incoming encrypted key to then decrypt it using the encryption key stored in the master file in order to thereby access each of the files and output contents thereof;
a table for storing the encrypted key necessary to access the file that corresponds to a request from the application;
a fingerprint sensor section for detecting a fingerprint; and
control means for reading out from the table the encrypted key relating to access to the file corresponding to the request from the application to output the key to the processing means and also obtain the fingerprint data from the processing means in order to compare and collate the fingerprint data with fingerprint data detected by the fingerprint sensor section and then transfer a collation result to the application, in such a configuration that the key necessary to access the data file is stored as encrypted corresponding to each of the applications, so that this key can be used to obtain necessary data of the file, thus making it possible to authenticate the plurality of applications.

2. The fingerprint authentication unit according to claim 1, wherein:
if the request from said application indicates fingerprint collation, said control means reads out the encrypted key necessary to access said fingerprint template file from said table and outputs said encrypted key to said processing means; and
said processing means uses the encryption key of said master file to thereby decrypt said encrypted key necessary to access said fingerprint template file and then access to said fingerprint template file, thus outputting the fingerprint data stored in said file to said control means.

3. The fingerprint authentication unit according to claim 2, wherein a fingerprint collation level is set for said application, so that said control means can decide the fingerprint data to be FALSE as a result of collation if collation does not come up with at least said level.

4. The fingerprint authentication unit according to any one of claims 1-3, wherein storage means is provided with a template for storing therein voice data or image data of the face, the iris, the retina, a sign, or a shape of the palm and an individual information section for storing individual information of the user.

5. The fingerprint authentication unit according to any one of claims 1-4, wherein said fingerprint template file stores therein fingerprint data of a plurality of fingers of the same person.

6. The fingerprint authentication unit according to claim 5, wherein said control means decides a collation result to be of TRUE if fingerprint data detected by said fingerprint sensor agrees in collation with said fingerprint data, stored in said fingerprint template file, of any one of said plurality of fingers.

7. The fingerprint authentication unit according to claim 5, wherein said control means decides a collation result to be of FALSE if fingerprint data detected by said fingerprint sensor does not agree in collation with said fingerprint data, stored in said fingerprint template file, of a specific one of said plurality of fingers.

8. The fingerprint authentication unit according to claim 5, wherein said control means decides a collation result to be of FALSE if fingerprint data detected by said fingerprint sensor does not agrees in collation with said fingerprint data, stored in said fingerprint template file, of at least some of said plurality of fingers in a specific order of said some fingers.

9. An authentication system comprising the fingerprint authentication unit according to any one of claims 1-8 and an apparatus which can be connected to the internet and in which applications can be executed, wherein:
said apparatus permits a user to be authenticated by fingerprint collation at said fingerprint authentication unit when said user purchases software, transmits a common key of said master file to the purchasing source and, when having received the software and a code encrypted with said common key transmitted from said purchasing source, outputs said encrypted code to said fingerprint authentication unit;
said fingerprint authentication unit receives said encrypted code to decrypt said encrypted code with said common key of said master file to store said encrypted code in a specific data file and then outputs said code stored in said specific data file to said apparatus when said software is used.

10. The authentication system according to claim 9, wherein a melody is purchased in place of said software over the internet, so that when said melody is reproduced, said code stored in said specific data file is used.

11. The authentication system according to claim 10, wherein when charge is paid upon purchasing, said fingerprint authentication unit authenticates the fingerprint at a high collation level, while said apparatus reads out the payment data from said data file and then transmits said payment data as encrypted to the purchasing source.

12. The fingerprint authentication unit according to any one of claims 1 to 8 which is provided with an ISO-Standard connection terminal and which
reads a state of a specific pin of the connection terminal, so that if the specific pin is in the power-ON state, the unit decides that the connection destination is a USB adapter device to enter the USB mode,
and if the specific pin is in the power-OFF state, the unit decides whether another pin is at a high or low voltage level, and if the voltage is at the low voltage level, it decides that the connection destination is an SIO adapter device to enter the SIO mode,
and if the voltage is at the high voltage level, it decides that the connection destination is an SIO adapter to enter the ISO mode.

13. The fingerprint authentication unit according to any one of claims 1 to 8 which is provided with an ISO-Standard connection, comprising:
an input/output circuit for deciding upon power application whether the sixth pin of the connection terminal is in the power-ON/OFF state to then output a decision result, and for deciding whether the fourth pin of the connection terminal is at the high/low voltage level to then output a decision result, if the sixth pin is in the power-OFF state;
a USB interface circuit which operates in the USB mode if the sixth pin is in the power-ON state;
an SIO interface circuit which operates in the SIO mode if the sixth pin is in the power-OFF state and the fourth pin is at the LOW voltage level; and
a CPU circuit section which sets the mode based on the decision result from the input/output circuit and also which operates in the ISO mode if the sixth pin is in the power-OFF state and the fourth pin is at the high voltage level.

14. The fingerprint authentication unit according to claim 13, wherein when operating in the USB mode, said USB interface circuit assigns the fourth and eighth pins of said connection terminal to D+ and D- signals of a USB respectively.

15. The fingerprint authentication unit according to claim 13, wherein when operating in the SIO mode, said SIO interface circuit receives incoming data from the fourth pin of said connection and outputs the data to the seventh pin thereof.

16. The fingerprint authentication unit according to claim 13, wherein when operating in the ISO mode, said input/output circuit inputs and outputs data through the seventh pin of said connection terminal.

17. The fingerprint authentication unit according to any one of claims 13-16, comprising a connection selection circuit for:
when the sixth pin of said connection terminal is in the power-OFF state, interconnecting the fourth pin and said input/output circuit;
in the SIO mode, outputting the data at said fourth pin to said SIO interface circuit and also outputting the data from said SIO interface circuit to the seventh pin; and
in the ISO mode, interconnecting said seventh pin and said input/output circuit.

18. The fingerprint authentication unit according to any one of claims 13-17, wherein said SIO interface circuit, said input/output circuit, said USB interface circuit, and said CPU circuit section are constituted in a one-chip microcomputer.
